# EUROPEAN PATENT SPECIFICATION

(11) **EP 1 634 211 B1**
(45) Date of publication and mention of the grant of the patent: **27.02.2008**
(21) Application number: 04734274.6
(22) Date of filing: 21.05.2004
(51) Int. Cl.: G06F 19/00, A63F 13/10

(54) **A METHOD, A MOBILE DEVICE AND A MEMORY UNIT FOR PLAYING GAMES**
VERFAHREN, MOBILE EINRICHTUNG UND SPEICHEREINHEIT ZUM SPIELEN VON SPIELEN
PROCEDE, DISPOSITIF MOBILE ET UNITE A MEMOIRE POUR SYSTEMES DE JEUX

(30) Priority: 21.05.2003 FI 20030768
(43) Date of publication of application: 15.03.2006
(73) Proprietor: MYORIGO S.A.R.L., L-2320 Luxemburg (LU)
(72) Inventor: VÄÄNÄNEN, Johannes, FI-90420 Oulu (FI)
(74) Representative: Savela, Antti-Jussi Tapani
(86) International application number: PCT/FI2004/050073
(87) International publication number: WO 2004/104897

(56) References cited:
- EP-A1- 1 380 324
- EP-A2- 1 248 181
- EP-A2- 1 291 047
- US-A1- 2002 072 418
- US-B1- 6 248 017
- DATABASE WPI Week 200349, Derwent Publications Ltd., London, GB; Class D17, AN 2003-517447, XP002994644 & JP 2003 122498 A (MATSUSHITA DENKI SANGYO KK) 25 April 2003

## Description

### FIELD OF INVENTION

The invention relates to a method and means for electronic gaming on mobile devices, such as mobile phones, PDA's (Personal Digital Assistants), or other computing devices. In particular, the invention relates to motion guided control of games or entertainment applications on mobile stations.

### BACKGROUND ART

Computer games are a popular form of entertainment Most of the computer games are played on fixed stations, such as a PC (Personal Computer) or a video game module. Recently some games for mobile stations have appeared, which use the keyboard of the mobile station as a form of user input. An example of this is the "WORM" game that is featured on some mobile phones by Nokia Mobile Phones Corporation. However, using the keyboard as a form of input is very limited and tedious, as the buttons are small, and pressing buttons takes quite a lot of time if several of them have to be pressed for one input

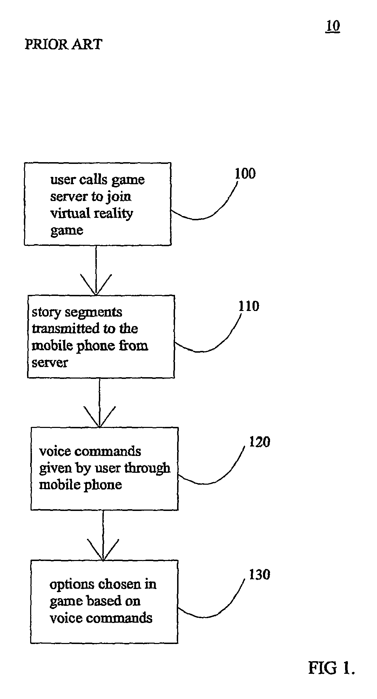

Some mobile games exist which allow the user to issue voice commands that are used to guide the progress of the game. The publication GB 2 355 627 A, "Interactive computer application controlled by a mobile", introduces such a game. This method is depicted in FIG. 1 as a flow diagram. In phase **100** the user calls a network server to join a virtual reality game. As the game is joined and begins, story segments are transmitted from the server to the mobile station primarily as voice in phase **110**. In phase **120** the user may issue voice commands to the server via the connection from the mobile phone. In phase **130** the voice commands are recognised, for example by IVR (Intelligent Voice Recognition) on the server, and options are chosen in the game based on the voice commands issued by the player through the mobile phone. Voice commands are slow and applicable only to mobile virtual reality games that are mainly text and voice based. The playing of action games in real time is exceedingly difficult with voice or keyboard commands.

Motion guided mobile devices for browsing data have been under development by the applicant. Patent application US 2002/0175896 A1 features a method and a device for browsing information on a display by tilting the mobile station. The data is displayed in a mirror-like way.

WO 01/27735 A1, "Operation method of user interface of handheld device" developed by the applicant, features a device and a method where data on the display is changed in response to moving the mobile device in three-dimensional space. The publication defines a cause-consequence relation between the movements of the mobile station by the user and the displayed data.

WO 03/023593 A1, "Navigation method, program product and device for presenting information in a user interface" developed by the applicant, features a method for controlling displayed data with a touch pad. As the user moves his finger on the touch pad, data is changed on the display in response to motion of finger.

Patent application US 2002/0072418, Masyama et al, describes a portable game apparatus having a cartridge inserted in the hole in the apparatus. The cartridge incorporates an acceleration sensor that detects movement and tilt of the apparatus in two directions perpendicular to each other. Tilting and movement of the apparatus are utilized as operational information for game control. Further, the acceleration sensor can set as a neutral position a tilted position of the game apparatus used by a player, so that the player can hold it with a desired tilt that makes it easy to play a game. While playing a game the game character is displayed depending upon at least a tilt direction detected by the acceleration sensor. Thus, a game image displayed on the display is controlled such that a display state of the game character is varied depending upon acceleration. In addition, moving the apparatus in the X-axis or Y-axis directions is used to control the game.

The drawback of the apparatus of Masyama et al. is that it is not sensitive to rotation of the apparatus. In other words it is not suitable for games where the image displayed on the display should maintain its orientation although a user rotates the apparatus for guiding a character of the game. In such games the apparatus itself may be used as a steering wheel for guiding a vehicle in a driving related game, for example, or as a joystick in some other games Patent application EP 1291047, Masayasu, describes a game system and a puzzle game program capable of changing displayed states of puzzle elements depending on a tilt of the game apparatus. A tilt detection section of the apparatus detects a tilt and gives an output. In response to the output a puzzle element displaying control section moves a puzzle element or elements displayed on the display screen.

The apparatus of Masayasu is specially adapted to puzzle games. Hence, it is not suitable for other kind of games in which rotation of the apparatus is used and where the image displayed on the display should maintain its orientation although a user rotates the apparatus for guiding a character of the game.

### SUMMARY OF THE INVENTION

A problem of the prior-art devices, where translational and/or rotational motion of the device is used to control aspects of the game and/or entertainment application, is that rotation of the device also rotates the image shown on the display. This is due to the fact that the image, especially the background image of a game, is bound and fitted to the physical display. In other words, when the device is rotated, the image also rotates. For example, rotation of 180 degrees results in the image having the wrong side up.

Thus, an objective of the present invention is to devise a developed motion guided method, a memory unit comprising a program product, and a device for mobile gaming, which maintain the sight of a game or an entertainment application shown on a display to a user stationary to the eye line of the user, even if the user moves or rotates the device, and hence the display, in order to control the game.

Preferably the device is a motion-controlled mobile phone provided with motion sensors for detecting user-originated movements of the mobile device, said movements including translational and tilting movements, wherein a game character on the display is moved depending upon at least a tilt direction detected by the motion sensors. The device is characterized in that an amount of rotational movement of the mobile device in a rotation direction is detected. The rotational movement takes place on a plane parallel to the display plane. Then the view to the game or entertainment application on the display is rotated in the opposite rotation direction and by the same amount. This results in that the view on the display is maintained stationary to the eye line of the user even the display itself is rotating.

The device may be connected to the Internet and/or telephony network, and the game and/or entertainment application may be played from at least one network server. The game and/or entertainment application may involve several players with various devices such as PC's or video game modules. In some embodiments of the invention, a number of devices may be connected to each other or other computing devices through a short-range cable, infra red connection or WLAN or other short-range connection.

A memory unit comprises a software program product and is characterised in that a motion detection software is arranged to detect the motion of the mobile station and to maintain the view to a game and/or entertainment application stationary to the eye line of a user.

In addition and with reference to the aforementioned advantage accruing embodiments, the best mode of the invention is considered to be the application of real time motion guidance of characters in action games and/or entertainment applications played on mobile stations.

### BRIEF DESCRIPTION OF THE DRAWINGS

In the drawings
- Fig. 1: depicts a known method for controlling a game,
- Fig. 2: demonstrates a basic exemplary embodiment of the method 20 for mobile gaming in accordance with the invention as a flow diagram,
- Fig. 3: demonstrates a more developed exemplary embodiment of the method 30 for mobile gaming in accordance with the invention as a flow diagram,
- Fig.4: demonstrates an exemplary embodiment of the method 40 for mobile gaming, the game involving vehicles, in accordance with the invention as a flow diagram,
- Fig. 5: demonstrates an exemplary embodiment of the method 50 for mobile gaming, the game involving fighting characters, in accordance with the invention as a flow diagram,
- Fig. 6: demonstrates an exemplary embodiment of the method 60 for mobile gaming on a network server in accordance with the invention as a flow diagram,
- Fig. 7: demonstrates a basic exemplary embodiment of the method 70 for mobile gaming in a multiparty game in accordance with the invention as a flow diagram,
- Fig. 8: demonstrates an exemplary embodiment of the mobile station for mobile gaming in accordance with the invention as a block diagram,
- Fig. 9: demonstrates an exemplary embodiment 90 of the use scenario of the mobile station for mobile gaming in accordance with the invention as a block diagram, and
- Fig. 10: demonstrates an exemplary embodiment 91 of the use scenario of the mobile station for mobile gaming, featuring inventive screen alignment, in accordance with the invention as a block diagram.
- Fig. 11: demonstrates an exemplary embodiment 92 of the use scenario of the mobile station for mobile gaming, featuring a game involving vehicles, in accordance with the invention as a block diagram.
- Fig. 12: demonstrates an exemplary embodiment 93 of the use scenario of the mobile station for mobile gaming, featuring a game involving a fighting character, in accordance with the invention as a block diagram.
- Fig. 13: demonstrates an exemplary embodiment of a system 94 for mobile gaming on a network server from a mobile station in accordance with the invention as a flow diagram.
- Fig. 14: demonstrates an exemplary embodiment of a system 95 for mobile gaming in a multiparty game on various computing devices in accordance with the invention as a block diagram.
- Fig. 15: demonstrates an exemplary embodiment of a memory unit comprising a software program product 96 for mobile gaming.

### DETAILED DESCRIPTION

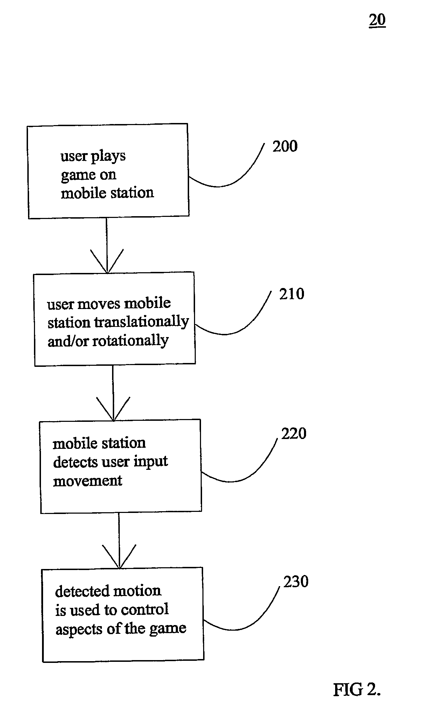

In phase 200 of FIG. 2 the user plays a game or an entertainment application on a mobile station. The game and/or entertainment application is typically an action game such as a racing, arcade, sporting or combat game, or any other game or form of interactive computerised entertainment requiring user input or the like. The mobile station is typically GSM, H323, HTTP, GSM data, IP-RAN, UMTS, WAP, Teldesic, Inmarsat, Iridium, GPRS, CDMA data, WCDMA data, HTTP, H323, SMS, MMS, email LAN, TCP/IP, imode, Globalstar and/or WLAN compliant mobile phone, or a PDA, or any other portable computerised device.

In phase 210 the user moves the mobile station, for example rotates it around some of its axes, or translationally moves it in three-dimensional space. In phase 220 the user movement is detected by the mobile station. In order to detect the movement, the mobile station may comprise piezoelectric, inductive and/or capacitive motion recognition devices. It is also possible to deduce the state of motion of the mobile station optically or electromagnetically by a camera, video camera, optical sensors, sonar sensors or any other sensors in accordance with the invention.

The detected motion is then interpreted as user input for the game, and thereby detected motion is used to control aspects of the game and/or entertainment application in phase 230.

Quite evidently the order of the phases 200, 210, 220, 230 may be permuted, and these phases can also executed concurrently in accordance with the invention.

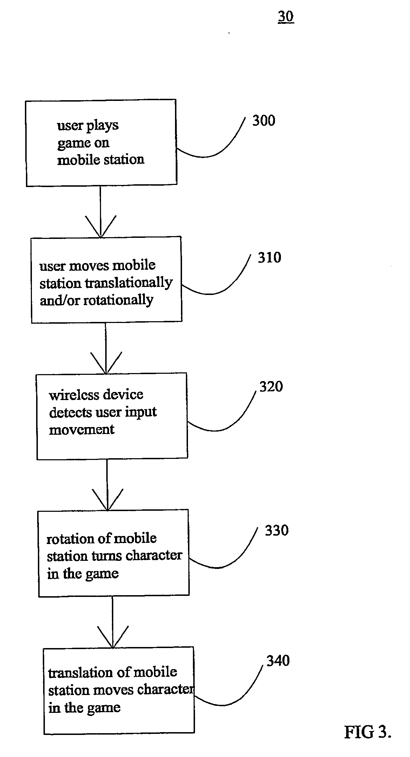

In phase 300 of FIG. 3 the user plays a game or an entertainment application on a mobile station. In phase 310 the user moves the mobile station, for example rotationally around some of its axes, or translationally moves it in three-dimensional space, or both. In phase 320 the wireless device or mobile station detects the user movement. In phase 330 the rotation of the mobile station by the user turns a character in the game, which may be a fighter, vehicle, artistic creature, or any other character in accordance with the game and/or entertainment application that is being played. In phase 340 the translational movement of the mobile station by the user moves a character in the game, for example walks a person, drives a vehicle, moves an artistic creature, or any other character in accordance with the game and/or entertainment application that is being played.

Quite clearly the interpretation of motion defined inputs to character actions is interchangeable, rotation may cause a translational movement of a character in the game, translation may cause turning and tilting may cause another action of a character. A vast number of states of motion of the mobile station may be arranged to correspond to different actions and user inputs in the game and/or entertainment application in accordance with the invention.

Also, quite evidently the order of the phases 300, 310, 320, 330, 340 may be permuted, and these phases can also executed concurrently in accordance with the invention.

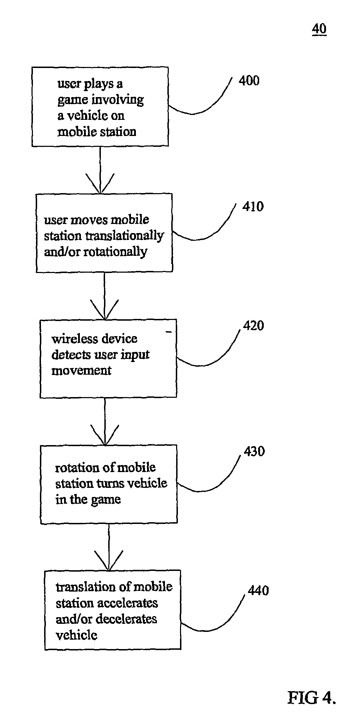

In phase 400 of FIG. 4 the user plays a game or an entertainment application involving a vehicle or an animal on a mobile station. This may be any racing, sporting or any action game or the like. In phase 410 the user moves the mobile station, for example rotationally around some of its axes, or translationally moves it in three-dimensional space, or both. In phase 420 the wireless device or mobile station detects the user movement In phase 430 the rotation of the mobile station by the user turns a vehicle in the game. The user may have windshield view from the vehicle in the game and/or entertainment application, or a bird view, i.e. from the back and up, or a satellite view from directly above, or any other conceivable view from which the vehicle that is a character in the game can be controlled.

In phase 440 the translational movement of the mobile station with respect to the user accelerates, decelerates or maintains the speed of a vehicle in the game. Again the user may have windshield view, or cockpit view from the vehicle in the game and/or entertainment application, or a bird view, i.e. from the back and up, or a satellite view from directly above, or any other conceivable view from which the vehicle that is a character in the game can be controlled. The vehicle in the game and/or entertainment application may be a car, motorcycle, bicycle, skateboard, surfboard, snowboard, ship, boat, rocket, missile, space ship, space station, UFO, submarine, train, hovercraft, plane, jet, helicopter, trolley, truck, bus, snow cat, horse, camel, ostrich, elephant, rhino, turtle or any other conceivable vehicle or animal or the like in accordance with the invention.

Quite clearly the interpretation of motion defined inputs to character actions is interchangeable, rotation may cause an acceleration or a deceleration change in linear motion of a vehicle character in the game and translation may cause turning, tilting may cause another action on the vehicle, such as changing gear, jumping or the like. A vast number of states of motion of the mobile station may be arranged to correspond to different actions and user inputs in the game and/or entertainment application in accordance with the invention.

Also, quite evidently the order of the phases 400, 410, 420, 430, 440 may be permuted, and these phases can also executed concurrently in accordance with the invention.

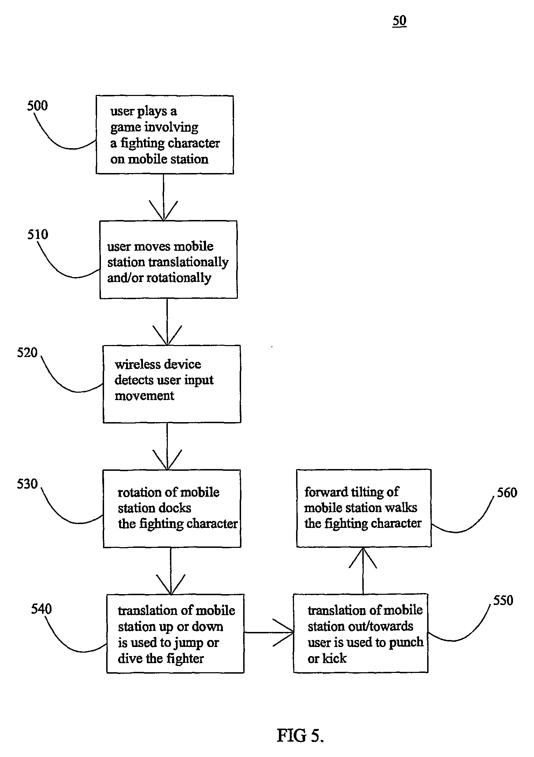

In phase 500 of FIG. 5 the user plays a game or an entertainment application involving a fighting character, such as a boxer or a soldier on a mobile station. This may be any racing, sporting, war or combat game or any action game, entertainment application or the like. In phase 510 the user moves the mobile station, for example rotationally around some of its axes, or translationally moves it in three-dimensional space, or both. In phase 520 the wireless device or mobile station detects the user movement.

In phase 530 the rotation of the mobile station by the user docks the fighting character in the game. The user may have the field of vision view of the fighter in the game and/or entertainment application, or a bird view, i.e. from the back and up, or a satellite view from directly above, side view or any other conceivable view from which the fighter that is a character in the game can be controlled.

In phase 540 the translational movement of the mobile station up or down with respect to the user jumps or dives the fighter in the game or entertainment application. In phase 550 translational movement of the mobile station towards or outwards with respect to the user launches a punch or a kick from the fighter in the game or entertainment application. In phase 560 tilting of the mobile station walks the fighting character in the game or entertainment application.

The fighter in the game and/or entertainment application may be a boxer, soldier, martial artist, monster, animal, rugby player, football player, wrestler, ice hockey player or any other conceivable fighter, sportsman, or fighting creature, or a fighting device in accordance with the invention.

Quite clearly the interpretation of motion-defined inputs to character actions is interchangeable, and a vast number of states of motion of the mobile station may be arranged to correspond to different actions and user inputs in the game and/or entertainment application in accordance with the invention. Further, one motion defined input may also signify a group of actions taken in the game and or entertainment application by a fighter or any other character. Symmetrically to this, a group of motion-defined inputs executed in sequence or otherwise together may also correspond to a dedicated action in the game and/or entertainment application.

Also, quite evidently the order of the phases 500, 510, 520, 530, 540, 550, 560 may be permuted, and these phases can also executed concurrently in accordance with the invention. Further, one input by the user may correspond to execution of a number of the aforementioned phases.

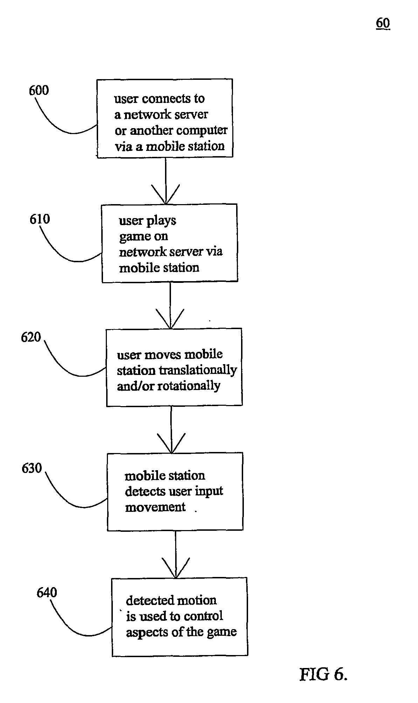

In phase 600 of FIG. 6 the user connects to a network server or another computer via a mobile station. The communication connection between the mobile station and the network server is typically a wireless connection, for example a GSM, H323, HTTP, GSM data, IP-RAN, UMTS, WAP, Teldesic, Inmarsat, Iridium, GPRS, CDMA data, WCDMA data, HTTP, H323, SMS, MMS, email LAN, TCP/IP, imode, Globalstar and/or WLAN compliant communication connection. In some embodiments the server is for example a HP-UX, Linux, Sun Solaris, or a PC server.

In phase 690 the user plays a game or an entertainment application on the server via the mobile station. In some embodiments parts of the computer program making up the game may be distributed between the mobile station and the server, or the game may reside entirely on the network server. In phase 620 the user moves the mobile station translationally and/or rotationally. In phase 630 the wireless device or mobile station detects the user movement, which is interpreted as user input. Detected motion inputs are then used to control aspects of the game and/or entertainment application in phase 640 on the server, mobile station or both.

Quite evidently the order of the phases 600, 610, 620, 630, 640 may be permuted, and these phases can also be executed concurrently in accordance with the invention.

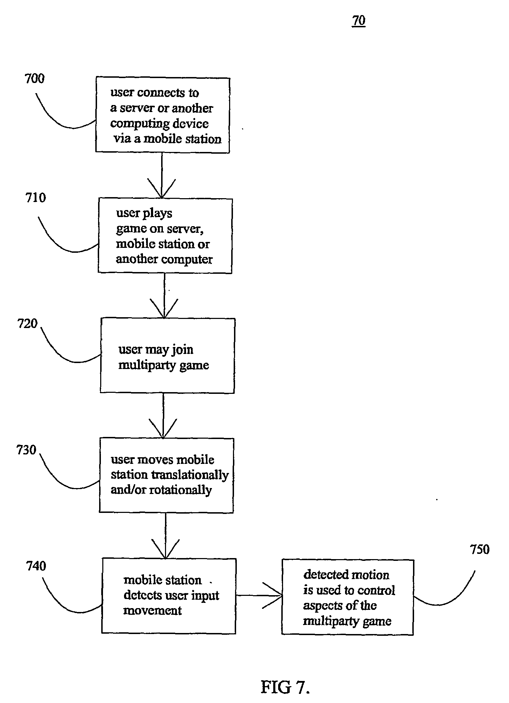

In phase 700 of FIG. 7 the user connects to a network server or another computer via a mobile station. The other computer may be a PC or another mobile station for example. In some embodiments the mobile station connects to the other computer through an Internet or a telephony connection that may be compliant to any protocol. In some embodiments the mobile station may also connect to another computer locally, for example through a wireless link such as a WLAN link, Bluetooth link an infrared link, such as an IrDA connection, or through a fixed connection cable.

In phase 710 the user plays a game or an entertainment application on the server, or another computing device via the mobile station. The game may be entirely on a mobile station, network server or another computing device, or it may be distributed among these devices in some variable proportion in accordance with the invention.

In phase 720 the user may join a multiparty game. In some embodiments the users of other computing devices, such as mobile stations or PC's or video consoles or other computing devices are the other players in the multiparty game.

In phase 730 the user moves the mobile station translationally and/or rotationally. In phase 740 the wireless device or mobile station detects the user movement, which is interpreted as user input. Detected motion defined inputs are then used to control aspects of the game and/or entertainment application in phase 750 on the server, mobile station, or other computing devices or on any combination of these devices or on all of the aforementioned devices. The multiparty game may thus be played in a distributed computing type fashion in some embodiments.

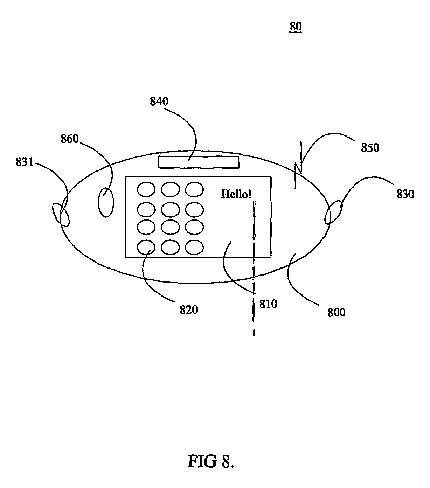

FIG. 8 exhibits an embodiment of the mobile gaming station 800 in accordance with the invention. The mobile station is typically GSM, H323, HTTP, GSM data, IP-RAN, UMTS, WAP, Teldesic, Inmarsat, Iridium, GPRS, CDMA data, WCDMA data, HTTP, H323, SMS, MMS, email LAN, TCP/IP, imode, Globalstar and/or WLAN compliant mobile phone, or a PDA, or any other portable computerised device.

The display 810 is arranged to display the game and/or entertainment application to the user, which is typically an action game such as a racing, arcade, sporting or combat game, or any other game or form of interactive computerised entertainment requiring user input or the like. The display may change its orientation in response to the position or motion of the mobile station, so that the user enjoys the best view to the game even when he is moving the mobile station in order to play the game.

In some embodiments the mobile station comprises also a keyboard 820, which may be integrated with the display or may be an external keyboard. Some set of commands to the game may be given with the keyboard to complement motion guided inputs. The mobile station may also feature controls, such as buttons or switches 830, 831 used to complement motion guided inputs in the game.

In some embodiments the mobile station comprises also a communication interface 840, which may be an infrared port, serial port, PCMCIA card slot, network card slot or the like for connecting to other computing devices for playing multiparty games, games in distributed computing fashion, or for communicating game and/or entertainment application related information and data.

In some embodiments the mobile station comprises also an antenna 850 which may be external or integrated, for forming wireless communication connections to the telephony network or the internet. The communication connections are typically GSM, H323, HTTP, GSM data, IP-RAN, UMTS, WAP, Teldesic, Inmarsat, Iridium, GPRS, CDMA data, WCDMA data, HTTP, H323, SMS, MMS, email LAN, TCP/IP, imode, Globalstar and/or WLAN compliant.

In some embodiments the mobile station comprises also at least one motion detector 860, which may be external or integrated, for detecting the state of motion of the mobile station. The motion detector may be a piezoelectric, inductive and/or capacitive motion recognition device in some embodiments. It is also possible that the motion detector comprises a camera, video camera, optical sensors, sonar sensors or any other sensors in accordance with the invention. Quite clearly the motion detector may also be a hybrid of the aforementioned types.

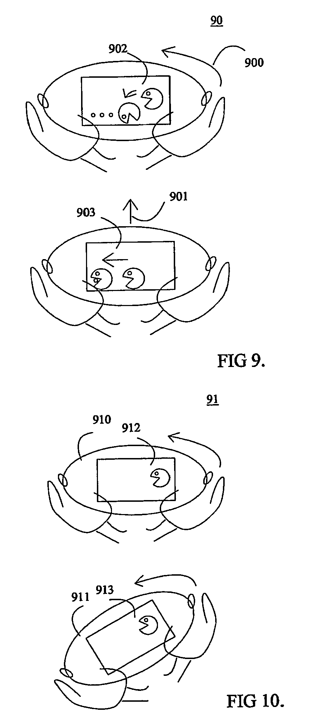

FIG. 9 exhibits a use scenario of the inventive method and device 90 in accordance with the invention. The game or entertainment application features the classical "PAC-MAN", the yellow creature that eats points in a labyrinth. As the user rotates 900 the mobile station, the PAC-MAN makes a turn 902 on the display. As the user pushes the mobile station outwards 901 from him, the PAC-MAN moves forward 903 to eat more points.

FIG. 10 exhibits a use scenario of the inventive method and device 91 in accordance with the invention, featuring inventive display control. As the user rotates the mobile station 910 and to turn the PAC-MAN, the view of PAC-MAN is maintained stationary to the eye-line of the user between display shots 912 and 913. This makes is easier for the user to perceive the status of the game, which could be disturbed by the movement of display in issuing motion-defined commands.

The display may compensate or change the data to be displayed in various ways in response to motion of the mobile station in accordance with the invention. In some embodiments the display is fixed to a certain environment in the game or entertainment application, and as the mobile station is moved, the user is displayed a certain part of the environment on the mobile display. This is analogous to the effect of looking through a digital camera, an image of the environment within the field of view is displayed on the display. The display is arranged to display a certain portion of the environment when the mobile station is in a certain position and/or state of motion, thus there is a predefined cause-consequence relationship between the state of motion and position of the mobile station and the displayed data from the game and/or entertainment application in some embodiments. This cause consequence relationship may take many forms within the boundaries of imagination of the programmer of the game and/or entertainment application and/or the player.

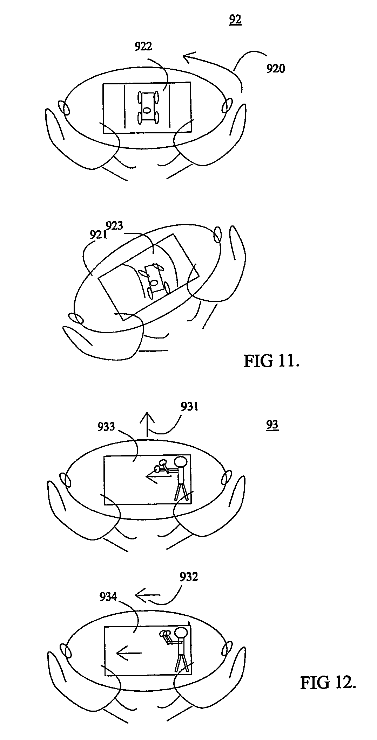

FIG. 11 exhibits a use scenario of the inventive method and device 92 in accordance with the invention, involving a car race game. As the user rotates the mobile station 920 in order for the car to take a turn, the car is turned 923 on the display, but not as much as the turning angle of the mobile station with respect to its horizontal axis. The inventive control method and device therefore allows some overhaul in motion-defined commands. Likewise under haul is possible in accordance with the invention, i.e. that the car turns more than the angle of the mobile station with respect to its horizontal axis.

FIG. 12 exhibits a use scenario of the inventive method and device 93 in accordance with the invention, involving a boxing game. As the user pushes the mobile station forward 931, the boxer punches. As the user moves the mobile station sideways 932, the boxer walks toward the other end of the screen.

Quite clearly the interpretation of motion-defined inputs to character actions is interchangeable in embodiments 90, 91, 92, 93, and a vast number of states of motion of the mobile station may be arranged to correspond to different actions and user inputs in the game and/or entertainment application in accordance with the invention. Further, one motion defined input may also signify a group of actions taken in the game, like a punching series or a jumping kick by a fighter or any other character. Symmetrically to this a group of motion-defined inputs executed in sequence or otherwise together may also correspond to a dedicated action in the game and/or entertainment application.

The motion of the mobile station is meant to provide user inputs by motion guiding that have previously been inputted by other computer game peripherals, such as joysticks or the like. It is within the accordance of the invention that the mobile station will act as a steering wheel in vehicle or driving related games, for example, or as a joystick in some other games, or generally reduce a typical peripheral user input set to a motion-defined user input set in order to provide user control commands to the game.

In some preferable embodiments computer peripheral input sets are combined, and many permutations may take place. A specially desirable embodiment integrates the steering wheel input command set, i.e. the mobile station is used as a steering wheel and turned accordingly, and the display keeps the view to the game stationary to the eye line of the user.

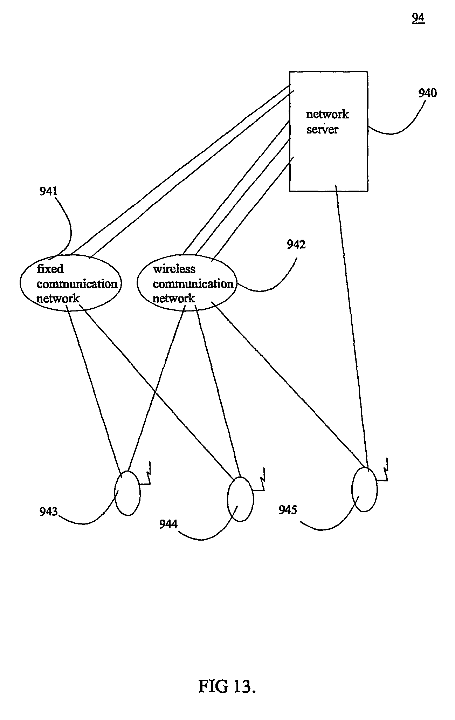

FIG. 13 exhibits a system 94 of devices executing mobile gaming in accordance with the invention. Mobile stations 943, 944, 945 are arranged to connect to a network server 940 through the wireless communication network 942, or a fixed communication network 941. In some embodiments the network server is hosted by the cellular operator providing service to the mobile stations 943, 944, 945. In some embodiments the network server is hosted by a third party service provider that provides the service to the clients of the network operator maintaining networks 942 and 943.

The communication connections are typically GSM, H323, HTTP, GSM data, IP-RAN, UMTS, WAP, Teldesic, Inmarsat, Iridium, GPRS, CDMA data, WCDMA data, HTTP, H323, SMS, MMS, email LAN, TCP/IP, imode, Globalstar and/or WLAN compliant, and the server is typically HP-UX, Linux, Sun Solaris, or a PC server.

A game or an entertainment application may be distributed between the network server 940 and the mobile stations 943, 944, 945, or it may be entirely contained on the network server 940. Quite clearly, mobile stations 943, 944, 945 can also connect to each other through the communication networks 941, 942, and thus a multiparty game may be distributed among several mobile stations and servers 940 in some embodiments.

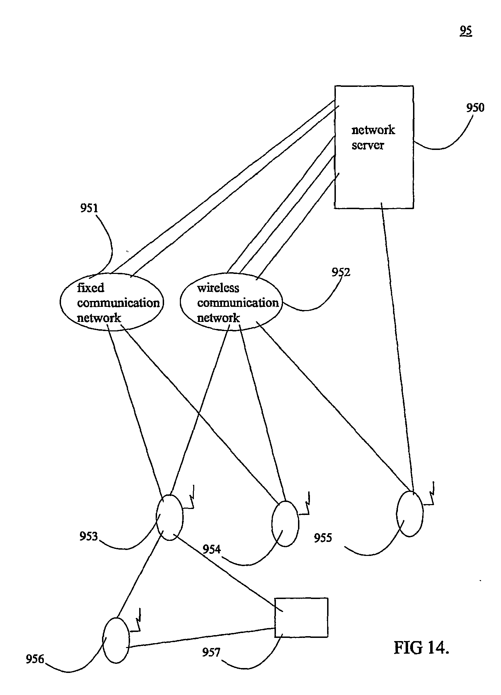

FIG. 14 exhibits a system 95 of devices executing mobile gaming in accordance with the invention. Mobile stations 953, 954, 955 are arranged to connect to a network server 950 through the wireless communication network 952, or a fixed communication network 951. Additionally to system 94, mobile stations 953, 954, 955 are arranged to connect locally to other computing devices, such as for example 956, 957, which may be mobile stations, PC's or any other computing devices. The local connections may be realised for example with a WLAN link, Bluetooth link, an infrared link, such as an IrDA connection, or through a fixed connection cable.

A multiparty game may be distributed among any of the computing devices 950, 953, 954, 955, 956 and/or 957 locally, or through a wireless or fixed communication network, telephony network or the Internet in some embodiments.

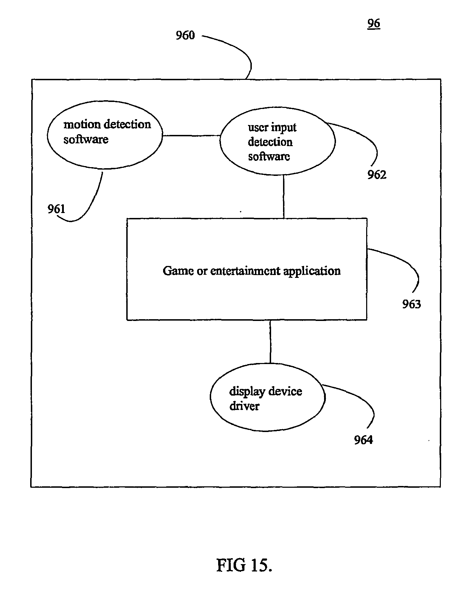

FIG. 15 exhibits a memory unit 96 comprising a software program product 960 for mobile gaming in accordance with the invention. The memory unit and/or software program product 960 are arranged to be installed to a mobile station. The motion detection software 961 is arranged to detect signals from sensors that measure and monitor the state of motion of the mobile station.

The user input detection software 962 is arranged to decipher motion defined user inputs from the detected motion signals, and provides the deciphered user inputs as user commands to the game or entertainment application 963.

The display device driver 964 is also arranged to use detected motion signals to display the visual output of the game or entertainment application 963 in the most pleasant way to the user. For example, in some embodiments the display device driver is arranged to maintain the view to the displayed game stationary to the eyeline of the user.

In some embodiments the software program product 960 is arranged to connect to the Internet, telephony network, network server or other computing devices in order to run games and/or entertainment applications hosted by other computing devices, or shared between various computing devices in a distributed computing fashion.

In some embodiments the game or entertainment application is arranged to support multiplayer gaming through local short range communication connections to other mobile stations or computing devices, or through a communication network to other mobile stations, network servers or other computing devices.

The software program product and/or memory unit is GSM, H323, HTTP, GSM data, IP-RAN, UMTS, WAP, Teldesic, Inmarsat, Iridium, GPRS, CDMA data, WCDMA data, HTTP, H323, SMS, MMS, email, LAN, TCP/IP, imode, Globalstar and/or WLAN communication compliant in some embodiments.

The invention has been explained above with reference to the aforementioned embodiments and several commercial and industrial advantages have been demonstrated. The methods and arrangements of the invention allow the use of motion of the device itself as a form of user input that eliminates the need for dedicated peripherals, such as touch pads or joysticks. Additionally, the use of motion guiding characters in a game is far faster and more ergonomic than controlling them by text or voice commands, and thus allows faster and more ergonomic control especially for action games on mobile stations.

The invention has been explained above with reference to the aforementioned embodiments. However, it is clear that the invention is not only restricted to these embodiments, but comprises all possible embodiments within the scope of the patent claims.

## Claims

1. A method for controlling the visual output of a game or entertainment application displayed on the display of a mobile device having motion sensors for detecting user-originated movements of the mobile device, said movements including translational and tilting movements, wherein a game character on the display is moved depending upon at least a tilt direction detected by the motion sensors, **characterised by** the steps of:
detecting an amount of rotational movement of the mobile device in a rotation direction, when rotational movement takes place on a plane parallel to the display plane,
rotating the view to the game and/or entertainment application on the display in the opposite rotation direction and by the same amount, wherein a user perceives the view stationary.

2. The method as claimed in claim 1, **characterised in that**, rotation of the mobile station is used to turn and/or move the character in the game and/or entertainment application.

3. The method as claimed in claim 1, **characterised in that** the display of the mobile station compensates the movement of the mobile station.

4. The method as claimed in claim 1, **characterised in that** the mobile device itself is used as a steering wheel or a joystick of a vehicle in the game.

5. The method as claimed in claim 1 or 4, **characterised in that** rotation of the mobile device is used to turn of move a character in the game and/or entertainment application.

6. The method as claimed in claim 1, **characterised in that** the mobile device is a mobile phone.

7. A mobile device for controlling the visual output of a game or entertainment application displayed on the display, comprising motion sensors for detecting user-originated movements of the mobile device, said movements including translational and tilting movements, wherein a game character on the display is moved depending upon at least a tilt direction detected by the motion sensors, **characterised in that**:
the motion sensors are further adapted to detect rotational movement in a rotation direction on a plane parallel to the display plane,
in response to the amount of the detected rotational movement, the view to the game and/or entertainment application on the display is rotated in the opposite rotation direction but by the same amount, wherein a user perceives the view stationary.

8. The mobile device as claimed in claim 7, **characterised in that** the display of the mobile device is arranged to compensate the movement of the mobile device.

9. The mobile device as claimed in claim 7, **characterised in that** the mobile device itself acts as a steering wheel or a joystick of a vehicle in the game:

10. The mobile device as claimed in claim 8 or 9, **characterised in that** in response to the rotation of the mobile device the character of the game and/or entertainment application is turned.

11. The mobile device as claimed in claim 7, **characterised in that** the mobile station is a mobile phone.

12. A memory unit comprising software for controlling the visual output of a game or entertainment application displayed on the display of a mobile device having motion sensors for detecting user-originated movements of the mobile device, said movements including translational and tilting movements, wherein the game character on the display is moved depending upon at least a tilt direction detected by the motion sensors, **characterised in that**
motion detection software is adapted to calculate an amount of rotational movement of the mobile device in a rotation direction based on the output signals from the motion sensors, wherein rotational movement takes place on a plane parallel to the display plane,
display driver software is adapted to rotate the view to the game and/or entertainment application on the display in the opposite rotation direction and by the same amount so that a user perceives the view stationary.

13. The memory unit as claimed in claim 12, **characterised in that** the display device driver of the mobile device is arranged to compensate the movement of the mobile device.

14. The memory unit as claimed in claim 12, **characterised in that** the software is further adapted to produce a signal to be used as a steering wheel control signal for a game and/or entertainment application (963).

15. The memory unit as claimed in claim 12, **characterised in that**, in response to the signal a character of the game and/or entertainment application is turned.

## Patentansprüche

1. Verfahren zum Steuern der visuellen Ausgabe eines Spiels oder einer Unterhaltungsanwendung, die auf der Anzeige einer mobilen Vorrichtung mit Bewegungssensoren zum Detektieren von vom Benutzer veranlassten Bewegungen der mobilen Vorrichtung angezeigt wird, wobei die Bewegungen Zug-Schub- und Kippbewegungen aufweisen, wobei ein Spieldarsteller auf der Anzeige in Abhängigkeit mindestens einer Kipprichtung bewegt wird, die von den Bewegungssensoren detektiert wird, **gekennzeichnet durch** die folgenden Schritte:
Detektieren einer Drehbewegungsmenge der mobilen Vorrichtung in eine Drehrichtung, wenn die Drehbewegung auf einer Ebene stattfindet, die zu der Anzeigeebene parallel ist,
Drehen der Ansicht des Spiels und/oder der Unterhaltungsanwendung auf der Anzeige in die entgegengesetzte Drehrichtung und um die gleiche Menge, wobei ein Benutzer die Ansicht ortsfest wahrnimmt.

2. Verfahren nach Anspruch 1, **dadurch gekennzeichnet, dass** die Drehung der Mobilstation benutzt wird, um den Darsteller in dem Spiel und/oder der Unterhaltungsanwendung zu drehen und/oder zu bewegen.

3. Verfahren nach Anspruch 1, **dadurch gekennzeichnet, dass** die Anzeige der Mobilstation die Bewegung der Mobilstation ausgleicht.

4. Verfahren nach Anspruch 1, **dadurch gekennzeichnet, dass** die mobile Vorrichtung selbst als ein Steuerrad oder ein Joystick eines Fahrzeugs in dem Spiel benutzt wird.

5. Verfahren nach Anspruch 1 oder 4, **dadurch gekennzeichnet, dass** die Drehung der mobilen Vorrichtung benutzt wird, um einen Darsteller in dem Spiel und/oder der Unterhaltungsanwendung zu drehen oder zu bewegen.

6. Verfahren nach Anspruch 1, **dadurch gekennzeichnet, dass** die mobile Vorrichtung ein Mobiltelefon ist.

7. Mobile Vorrichtung zum Steuern der visuellen Ausgabe eines Spiels oder einer Unterhaltungsanwendung, die auf der Anzeige angezeigt wird, umfassend Bewegungssensoren zum Detektieren von vom Benutzer veranlassten Bewegungen der mobilen Vorrichtung, wobei die Bewegungen Zug-Schub- und Kippbewegungen aufweisen, wobei ein Spieldarsteller auf der Anzeige in Abhängigkeit mindestens einer Kipprichtung bewegt wird, die von den Bewegungssensoren detektiert wird, **dadurch gekennzeichnet dass**:
die Bewegungssensoren ferner ausgelegt sind, um eine Drehbewegung in eine Drehrichtung auf einer Ebene, die zu der Anzeigeebene parallel ist, zu detektieren,
als Reaktion auf die Menge an detektierter Drehbewegung die Ansicht des Spiels und/oder der Unterhaltungsanwendung auf der Anzeige in die entgegengesetzte Drehrichtung, jedoch um die gleiche Menge gedreht wird, wobei ein Benutzer die Ansicht ortsfest wahrnimmt.

8. Mobile Vorrichtung nach Anspruch 7, **dadurch gekennzeichnet, dass** die Anzeige der mobilen Vorrichtung angeordnet ist, um die Bewegung der Mobilstation auszugleichen.

9. Mobile Vorrichtung nach Anspruch 7, **dadurch gekennzeichnet, dass** die mobile Vorrichtung selbst als ein Steuerrad oder ein Joystick eines Fahrzeugs in dem Spiel fungiert.

10. Mobile Vorrichtung nach Anspruch 8 oder 9, **dadurch gekennzeichnet, dass** als Reaktion auf die Drehung der mobilen Vorrichtung der Darsteller des Spiels und/oder der Unterhaltungsanwendung gedreht wird.

11. Mobile Vorrichtung nach Anspruch 7, **dadurch gekennzeichnet, dass** die Mobilstation ein Mobiltelefon ist.

12. Speichereinheit, umfassend eine Software zum Steuern der visuellen Ausgabe eines Spiels oder einer Unterhaltungsanwendung, die auf der Anzeige einer mobilen Vorrichtung mit Bewegungssensoren zum Detektieren von vom Benutzer veranlassten Bewegungen der mobilen Vorrichtung angezeigt wird, wobei die Bewegungen Zug-Schub- und Kippbewegungen aufweisen, wobei der Spieldarsteller auf der Anzeige in Abhängigkeit mindestens einer Kipprichtung bewegt wird, die von den Bewegungssensoren detektiert wird, **dadurch gekennzeichnet dass**:
die Bewegungsdetektionssoftware ausgelegt ist, um auf der Grundlage der Ausgabesignale der Bewegungssensoren eine Drehbewegungsmenge der mobilen Vorrichtung in eine Drehrichtung zu berechnen, wobei die Drehbewegung auf einer Ebene stattfindet, die zu der Anzeigeebene parallel ist,
eine Anzeigetreibersoftware ausgelegt ist, um die Ansicht des Spiels und/oder der Unterhaltungsanwendung auf der Anzeige in die entgegengesetzte Drehrichtung und um die gleiche Menge zu drehen, so dass ein Benutzer die Ansicht ortsfest wahrnimmt.

13. Speichereinheit nach Anspruch 12, **dadurch gekennzeichnet, dass** der Anzeigevorrichtungstreiber der mobilen Vorrichtung angeordnet ist, um die Bewegung der mobilen Vorrichtung auszugleichen.

14. Speichereinheit nach Anspruch 12, **dadurch gekennzeichnet, dass** die Software ferner ausgelegt ist, um ein Signal zu erzeugen, das als ein Steuerrad-Steuersignal für ein Spiel und/oder eine Unterhaltungsanwendung (963) benutzt wird.

15. Speichereinheit nach Anspruch 12, **dadurch gekennzeichnet, dass** als Reaktion auf das Signal ein Darsteller des Spiels und/oder der Unterhaltungsanwendung gedreht wird.

## Revendications

1. Procédé pour contrôler le rendement visuel d'un jeu ou d'une application de divertissement affichés sur l'affichage d'un dispositif mobile possédant des détecteurs de mouvement pour détecter les mouvements produits par l'utilisateur du dispositif mobile, lesdits mouvements incluant des mouvements de translation et des mouvements de pivotement, dans lequel un personnage de jeu est déplacé sur l'affichage en fonction d'au moins un sens de pivotement détecté par les détecteurs de mouvement, **caractérisé par** les étapes suivantes :
détection d'une quantité de mouvement de rotation du dispositif mobile dans un sens de rotation, lorsque le mouvement de rotation a lieu sur un plan parallèle au plan d'affichage,
rotation de la vue du jeu et/ou de l'application de divertissement sur l'affichage, dans le sens de rotation opposé et selon la même quantité, permettant à l'utilisateur d'avoir une vue stationnaire.

2. Procédé selon la revendication 1, **caractérisé en ce que** la rotation de la console mobile est utilisée pour faire tourner et/ou se déplacer le personnage dans le jeu et/ou l'application de divertissement.

3. Procédé selon la revendication 1, **caractérisé en ce que** l'affichage de la console mobile compense le mouvement de la console mobile.

4. Procédé selon la revendication 1, **caractérisé en ce que** le dispositif mobile lui-même est utilisé comme un volant de commande ou un levier de commande d'un véhicule dans le jeu.

5. Procédé selon les revendications 1 ou 4, **caractérisé en ce que** la rotation du dispositif mobile est utilisée pour faire tourner ou se déplacer un personnage dans le jeu et/ou dans l'application de divertissement.

6. Procédé selon la revendication 1, **caractérisé en ce que** le dispositif mobile est un téléphone mobile.

7. Dispositif mobile pour contrôler le rendement visuel d'un jeu ou d'une application de divertissement affichés sur l'affichage, comprenant des détecteurs de mouvement pour détecter les mouvements du dispositif mobile produits par l'utilisateur, lesdits mouvements incluant des mouvements de translation et des mouvements de pivotement, dans lequel un personnage de jeu est déplacé sur l'affichage en fonction d'au moins un sens de pivotement détecté par les détecteurs de mouvement, **caractérisé en ce que** :
les détecteurs de mouvement sont en outre adaptés pour détecter un mouvement de rotation dans un sens de rotation sur un plan parallèle au plan d'affichage,
en réponse à la quantité du mouvement de rotation détecté, la vue du jeu et/ou de l'application de divertissement sur l'affichage est tournée dans le sens de rotation opposé mais selon la même quantité, permettant à l'utilisateur d'avoir une vue stationnaire.

8. Dispositif mobile selon la revendication 7, **caractérisé en ce que** l'affichage du dispositif mobile est conçu pour compenser le mouvement du dispositif mobile.

9. Dispositif mobile selon la revendication 7, **caractérisé en ce que** le dispositif mobile lui-même agit comme un volant de commande ou comme un levier de commande d'un véhicule dans le jeu.

10. Dispositif mobile selon les revendications 8 ou 9, **caractérisé en ce que** le personnage du jeu et/ou de l'application de divertissement est tourné en réponse à la rotation du dispositif mobile.

11. Dispositif mobile selon la revendication 7, **caractérisé en ce que** la console mobile est un téléphone mobile.

12. Unité de mémoire comprenant un logiciel pour contrôler le rendement visuel d'un jeu ou d'une application de divertissement affichés sur l'affichage d'un dispositif mobile possédant des détecteurs de mouvement pour détecter les mouvements du dispositif mobile produits par l'utilisateur, lesdits mouvements incluant des mouvements de translation et des mouvements de pivotement, dans lequel le personnage de jeu est déplacé sur l'affichage en fonction d'au moins un sens de pivotement détecté par les détecteurs de mouvement, **caractérisée en ce que** :
le logiciel de détection de mouvement est adapté pour calculer une quantité de mouvement de rotation du dispositif mobile dans un sens de rotation, sur la base des signaux de sortie venant des détecteurs de mouvement, le mouvement de rotation ayant lieu sur un plan parallèle au plan d'affichage,
le logiciel pilote de l'affichage est adapté pour faire tourner la vue du jeu et/ou de l'application de divertissement sur l'affichage, dans le sens de rotation opposé et selon la même quantité, de sorte que l'utilisateur perçoit une vue stationnaire.

13. Unité de mémoire selon la revendication 12, **caractérisée en ce que** le pilote du dispositif d'affichage du dispositif mobile est conçue pour compenser le mouvement du dispositif mobile.

14. Unité de mémoire selon la revendication 12, **caractérisée en ce que** le logiciel est en outre adapté pour produire un signal utilisé comme un signal de contrôle du volant de commande pour un jeu et/ou une application de divertissement (963).

15. Unité de mémoire selon la revendication 12, **caractérisée en ce qu'**un personnage du jeu et/ou de l'application de divertissement est tourné en réponse au signal.
